# EUROPEAN PATENT APPLICATION

(11) **EP 0 860 349 A2**
(43) Date of publication of application: **26.08.1998**
(21) Application number: 98102977.0
(22) Date of filing: 20.02.1998
(51) Int. Cl.: B62D 39/00

(54) **Safety device for cars**

(30) Priority: 21.02.1997 IT MI970366
(71) Applicant: GFM S.r.l., 43100 Parma (IT)
(72) Inventor: Mozzati, Gianfranco, 20090 Pioltello, Milano (IT)

(57) **Abstract**

A safety device for cars for allowing the fluctuation of driver and passenger compartment, characterized by mechanical and elastic (15) elements. These elements contribute to the fluctuation of car's driver and passenger compartment (1), totally absorbing the forces consequent to violent impacts of the vehicle. This invention is particularly suitable for minimizing the driver and the passengers trauma during violent impact due to car accidents.

## Description

The present invention relates to a safety device for cars for the purpose of reducing the damages to persons and vehicles caused by car accidents.

Accidents involving cars often cause the driver and the passengers to sustain serious injuries. Conventional driver and passenger compartments are designed to prevent or reduce the consequences of violent impacts of the vheicles deforming their structure during the car accident, but in this way the safety of driver and passengers is strongly dependent on the total mass of the vehicle involved in the accident.

The present invention concerns a safety device that allow during a car accident the fluctuation of car's driver and passenger compartment for the purpose of reducing the gravity of the damages to passengers and vehicle.
The present invention further concerns a safety device that can equip newly manufactured vehicles.

The present invention seeks to provide a safety device for cars to allow the fluctuation of driver and passenger compartment for the purpose of reducing the damages to persons and vehicles involved in a car accident. This device can be integrated into newly manufactured vehicles.

In accordance with the invention, the device is essentially characterized by two main slideways along which a car's driver and passenger compartment can slide. These slideways that are drawn in the chassis of the car with proper forms that link the passages of the front wheels to those of the rear wheels, make up a strong nerve system for the reinforcement of the structure of the car. Cavities with a geometry similar to that of the main nerve system are made on the lateral sides of driver and passenger compartment, and constitute the necessary seats for the movement of the driver and passenger compartment along the two slideways. Supporting balls are setted to reduce the friction between the slideways and the driver and passenger compartment. The driver and passenger compartment is also equipped with a variable geometry bottom in a position corresponding to the rudder on the drive side and to the front passenger area.
This bottom and the drive commands joints are studied to avoid interference with the driver when, after a driver and passenger compartment fracture due to a road accident, their instantaneous disengagements occurs.
Furthermore the device allows the rotation of the passenger seats fixed to the base of the driver and passenger compartment by the use of particular ball bearings.
The movements of the driver and passenger compartment during its fluctuation are shock absorbed by elastic elements that are fixed to the car's chassis, and driven by a pulley integral with the rear boot and the rear bumper, made themselves mobile on the car's chassis. This pulley is also interconnected with the front drive that has similar movements on the chassis.
The sliding of the mobile parts of the device, both anterior "front drive" and rear "boot and bumper block", transfers a shift to the driver and passenger compartment that is doubled and in the same direction when compared to the shift of the mobile parts. Such shift streches the elastic elements that shock absorb and minimize the sliding of the driver and passenger compartment itself.

The integration of the device with cars makes the cars safer than conventional cars and more suitable to reduce the severity of damages to persons and vehicles caused by road accidents which often happen.

The invention will now be described by way of example and with reference to the accompanying drawings in which:
Figure 1 is a lateral perspective view of a car equipped with a safety device, constructed in accordance with a preferred embodiment of the invention;
Figure 2 shows a driver and passenger compartment of the car of Figure 1 fluctuation along the slideways drawn in the car's chassis ;
Figure 3 is a plan view, as viewed from the back, of the device of Figure 1; and
Figure 4 is a plan view, as viewed from the top, of the device of Figure 1.

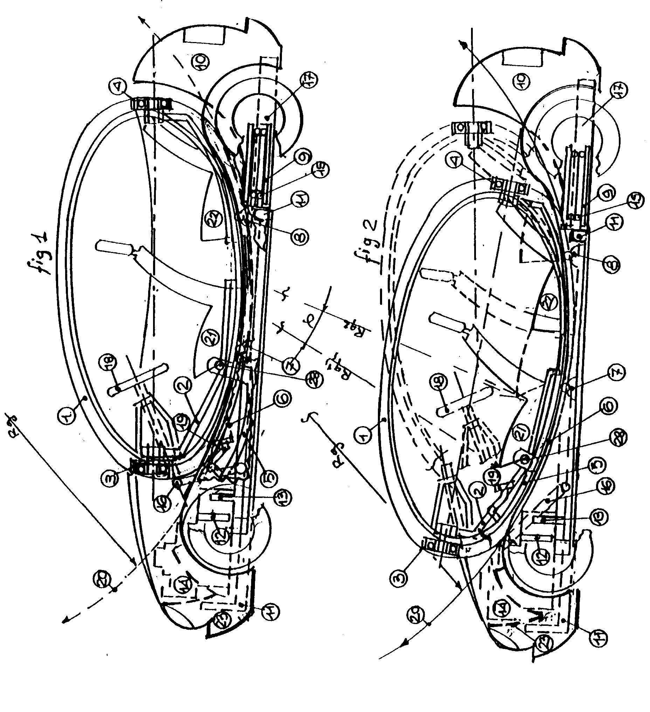

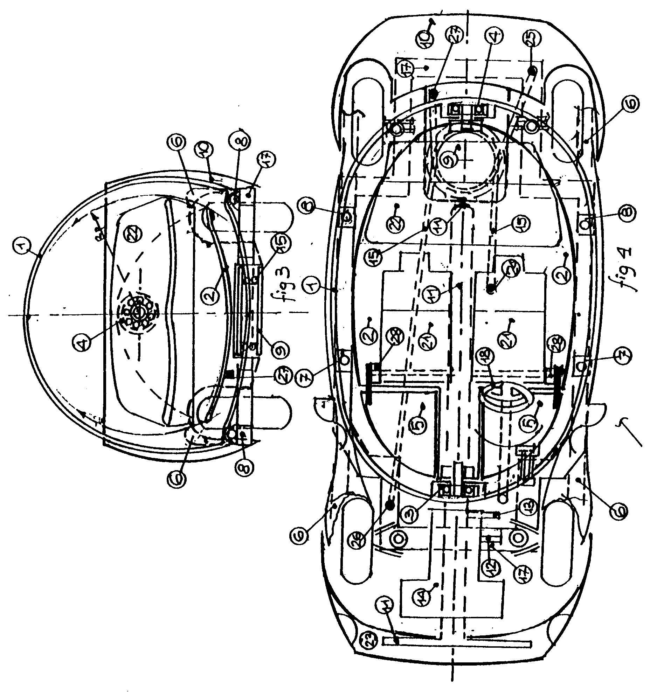

Figures 1, 2, 3 and 4 illustrate a safety device for cars, characterized by two main slideways 6 along which a car's driver and passenger compartment 1 can slide. The seats 8 for the slideways 6 are set longitudinally and on the base lateral sides of the driver and passenger compartment 1, while corresponding to the drive pedals and to the front passenger side are two mobile layers 5 that, hinged to points 28, can modify the geometry of the driver and passenger compartment 1.
Supporting balls 7 and 8 are positioned between the slideways 6 and the driver and passenger compartment 1 to reduce the friction.
When the driver and passenger compartment 1 slides, the variable geometry of its bottom and the relative command pedals reduce the bulk of the driver and passenger compartment 1 that can slide without interfering with the motor 14.
The steering wheel 18 is blocked with a system of joints, in such a way that a shift of the driver and passenger comparment 1 causes its disengagement.
Two ball bearing means 3 and 4, connected to the layer 2 where are fixed the front seats 21 and the back seats 22, allow the rotation of the seats 21 and 22 around the longitudinal axis passing through the centres of the two ball bearings.
The complete fluctuation of the driver and passenger compartment 1 is regulated by a pulley 9 fixed to the boot 10 by means of a support 27 that is free to slide along the side members 17 of the chassis. The pulley 9 can be pushed also by the backing of the rigid part 11 linked to the front drive 23. The pulley 9 drives two elastic elements that are fixed respectively with the sides 25 and 26 to the chassis and with the other sides 24 and 27 to the driver and passenger compartment 1.
The longitudinal slide of the pulley 9 transfers a doubled shift, with the same direction, to the driver and passenger compartment 1.
The foregoing description is for purposes of illustration only and is not intended to limit the scope of protection accorded this invention. The scope of protection is to be measured by the following claims, which should be interpreted as broadly as the inventive contribution permits.

## Claims

1. A safety device for cars comprising mechanical and elastic elements and one or more slideways along which the car's driver and passenger compartment can slide.

2. A device as claimed in Claim 1, wherein the slideways are drawn in the chassis of the car with proper forms, connecting the passages of the front wheels to those of the rear wheels.

3. A device as claimed in Claim 1, wherein cavities with same slideways sizes are laterally drawn, in a longitudinal direction, in the base of the driver and passenger compartment.

4. A device as claimed in Claim 1, wherein the driver and passenger compartment has in the bottom two mobile layers one of which positioned in the car pedals side with drive command system incorporated and the other positioned in the corresponding opposite part.

5. A device as claimed in Claim 4, wherein the shift of the mobile layers during the fluctuations of the driver and passenger compartment avoids dangerous contact of the driver with the drive commands and avoids interference with the mechanical parts set in the chassis.

6. A device as claimed in Claim 4, wherein the steering wheel, fixed in place by a system of joints, is disengaged when the driver and passenger compartment shifts.

7. A device as claimed in Claim 1, further comprising ball bearing means positioned in the front and rear sides of the driver and passenger compartment for allowing a fluctuation of the driver and passenger compartment base around their rotation axis.

8. A device as claimed in Claim 1, further comprising a pulley fixed to the rear boot that can slide on the car's chassis.

9. A device as claimed in Claim 8, wherein the pulley drives two elastic elements fixed to the car chassis and to the driver and passenger compartment.

10. A device as claimed in Claim 1, further comprising means for equipping newly manufactured vehicles.
